# EUROPÄISCHE PATENTSCHRIFT

(11) **EP 1 555 488 B1**
(45) Veröffentlichungstag und Bekanntmachung des Hinweises auf die Patenterteilung: **11.05.2011**
(21) Anmeldenummer: 04026848.4
(22) Anmeldetag: 11.11.2004
(51) Int. Cl.: F24D 19/10, F16K 3/26

(54) **Drosselventil**
Throttling valve
Vanne d'étranglement

(30) Priorität: 13.01.2004 DE 202004000412 U
(43) Veröffentlichungstag der Anmeldung: 20.07.2005
(73) Patentinhaber: Reich KG, Regel- und Sicherheitstechnik, 35713 Eschenburg (DE)
(72) Erfinder: Bender, Steffen, 35745 Herborn (DE)
(74) Vertreter: Schurack, Eduard F.

(56) Entgegenhaltungen:
- AT-U1- 6 052
- CH-A5- 692 591
- FR-A- 2 270 497
- NL-C1- 1 006 530
- US-A- 3 985 332

## Beschreibung

Die vorliegende Erfindung betrifft ein Drosselventil, insbesondere zur Steuerung eines Flüssigkeitsstroms in einem Zentralheizungs- oder Klimaanlagensystem, mit einer Durchflussregelungseinheit mit einem ersten und einem zweiten Element, die zur Einstellung eines gewünschten Durchflusses relativ zueinander bewegbar angeordnet sind.

Ein derartiges Drosselventil ist bekannt aus der DE 298 06 215 U1. Dort wird der Durchfluss dadurch geregelt, dass mindestens eine in der Wand der Buchse angeordnete Durchflussbegrenzungsöffnung ganz oder teilweise mit einer in der Wand einer Hülse angeordneten und mit dem Verteilerrohr in Verbindung stehenden Durchflussöffnung in Deckung bringbar bzw. verschließbar ist.

Aus der DE 201 11 656.1 U1 ist ebenfalls ein derartiges Drosselventil bekannt, bei dem die Durchflussregelungseinheit eine erste Scheibe mit einer Durchflussbegrenzungsöffnung und eine zweite Scheibe mit einer Durchflussbegrenzungsöffnung aufweist, wobei die zweite Scheibe parallel zu der ersten Scheibe angeordnet ist. Durch Drehung der ersten Scheibe gegenüber der zweiten Scheibe lässt sich die Gesamtfläche von sich überschneidenden Öffnungsbereichen variieren und damit ein gewünschter Durchfluss einstellen.

Weiterhin ist aus der EP 0 797 080 ein Durchflussregulierventil mit Durchflussmesser bekannt, bei dem der Ventilschließkörper eine Steuerkante aufweist, die beim Auslassstutzen mit dem Ventilsitz zusammenwirkt und somit den Austrittsquerschnitt steuert.

Schließlich zeigt die EP 0 789 821 eine Ventilvorrichtung, insbesondere zur Steuerung des Flüssigkeitsdurchsatzes in einer zentralen Heiz- oder Klimaanlage, bei der zwei Scheiben in 45-Grad-Sprüngen zur Regelung des Durchflusses gegeneinander gedreht werden können. Aufgrund der Öffnungen können nur voreingestellte Durchflussmengen erreicht werden, die sich durch Kombinationen der verschiedenen Öffnungen der einen Scheibe mit den verschiedenen Öffnungen der anderen Scheibe ergeben.

Die AT 006 052 U1 beschreibt einen Sicherheitsablass zum Ablassen einer Flüssigkeit aus einem Behälter. Der Sicherheitsablass weist einen drehbar in einem Verschlussgehäuse angebrachten Dichtkörper zur Einstellung einer Größe einer Öffnung des Verschlussgehäuses auf.

Das in der US 3,985,332 A offenbarte Sicherheitsventil ist so aufgebaut, dass sich ein Behälter über das Sicherheitsventil nur einmal befüllen lässt. Bei einem weiteren Befüllversuch verschließt sich das Sicherheitsventil automatisch selbst.

Die NL 1 006 530 offenbart eine Vorrichtung zum Steuern einer Fließgeschwindigkeit einer Flüssigkeit durch ein Rohr. Die Vorrichtung umfasst zwei zueinander verstellbare Buchsen, von denen die erste eine Öffnung und die zweite einen keilförmigen Einsatz für zumindest eine Teilabdeckung der Öffnung aufweist.

Des Weiteren beschreibt die CH 692 591 A5, aus der die Merkmale des Oberbegriffs von Anspruch 1 bekannt sind, ein Verteilerventil, welches ein Abzweigrohr, eine Spindel und einen an einem Ende der Spindel angebrachten Verschlusskörper aufweist. Das Abzweigrohr ragt von einer Seite in einen Hauptleitungsabschnitt, so dass über die unverdeckte Öffnung des Abzweigrohrs ein Flüssigkeitsstrom zwischen dem Inneren des Abzweigrohrs und dem Hauptleitungsabschnitt möglich ist. Zum Variieren der Abdeckung dieser Öffnung ist die Spindel an der gegenüberliegenden Seite des Abzweigrohrs drehbar angebracht. Über ein Drehen der Spindel kann die Position des in das Hauptleitungsrohr hineinragenden Verschlusskörpers bezüglich der Öffnung des Abzweigrohrs verändert werden.

Der Nachteil der aus dem Stand der Technik bekannten Drosselventile besteht darin, dass, um eine vollständige Absperrfunktion realisieren zu können, die maximale Durchflussöffnung begrenzt ist und in einem relativ niedrigen maximalen Durchfluss resultiert. In Folge davon stellt sich auch ein unerwünscht hoher Druckverlust ein.

Die Aufgabe der vorliegenden Erfindung besteht deshalb darin, ein gattungsgemäßes Drosselventil derart weiterzubilden, dass es weiterhin eine feine Regulierbarkeit der Durchflussmenge ermöglicht, jedoch bei höherem Durchfluss und geringerem Druckverlust als bei den aus dem Stand der Technik bekannten Drosselventilen.

Diese Aufgabe wird gelöst durch ein Drosselventil mit den Merkmalen von Anspruch 1.

Der Erfindung liegt die Erkenntnis zugrunde, dass diese Aufgabe dann optimal gelöst werden kann, wenn anstelle einer Öffnung, die quer zur Fließrichtung liegt, die Größe eines Ringspalts variiert wird, wobei die Fläche eine Komponente aufweist, die quer zur Fließrichtung orientiert ist, und eine Komponente, die in Fließrichtung orientiert ist. Bei einem erfindungsgemäßen Drosselventil nimmt die Komponente der Fläche des Ringspalts, die in Fließrichtung orientiert ist, mit zunehmendem Öffnen des Ventils zu. Damit wird eine homogenere Strömung erreicht als bei den aus dem Stand der Technik bekannten Drosselventilen, insbesondere ein unerwünschter Flüssigkeitsstau und die damit einhergehenden unerwünschten Turbulenzen vermieden.

Erfindungsgemäß wird dies bei einem gattungsgemäßen Drosselventil durch die Kennzeichnenden Merkmale von Anspruch 1 erreicht. Durch entsprechende Ausbildung der Gewindesteigung lässt sich damit die Relativbewegung der beiden Buchsen zueinander sehr fein dosieren, was in einer sehr feinen Regulierbarkeit der Durchflussmenge durch das erfindungsgemäße Drosselventil resultiert.

Bevorzugt umfasst die Durchflussregelungseinheit eine Drehvorrichtung, die derart mit der ersten Buchse verbunden ist, dass die erste Buchse durch Drehung der Drehvorrichtung relativ zur zweiten Buchse drehbar ist. Dadurch ergibt sich die Möglichkeit, die Buchse und die Drehvorrichtung als unterschiedliche Baugruppen auszubilden, was sich insbesondere im Hinblick auf die Realisierung einer Durchflussmesseinheit, siehe hierzu die detaillierteren Ausführungen weiter unten, als vorteilhaft erweist.

Bevorzugt weist die erste Buchse mindestens eine erste und eine zweite Öffnung auf, die ausgelegt sind, dass entweder die Flüssigkeit durch die erste Öffnung in die erste Buchse einströmt und durch die zweite Öffnung in der zweiten Buchse ausströmen kann, oder die Flüssigkeit von der zweiten Buchse kommend durch die zweite Öffnung in die erste Buchse hineinströmen und über die erste Öffnung aus der ersten Buchse herausströmen kann. Dies berücksichtigt unter anderem, dass bei dem erfindungsgemäßen Drosselventil eine Durchströmung in beiden Richtungen ohne Probleme realisiert werden kann, d. h. ein Einsatz sowohl im Vorlauf als auch im Rücklauf möglich ist.

Besonders geringe Druckverluste ergeben sich, wenn der Durchmesser der beiden Buchsen derart aufeinander abgestimmt ist, dass eine Buchse zumindest teilweise entlang ihrer Längserstreckung in der anderen Buchse angeordnet ist. Dies ermöglicht auch, eine der beiden Buchsen mit einem Außengewinde und die andere mit einem Innengewinde zu versehen, so dass sich bei der Relativbewegung der beiden Buchsen zueinander dennoch die Dichtigkeit des Übergangs der beiden Buchsen sicherstellen lässt.

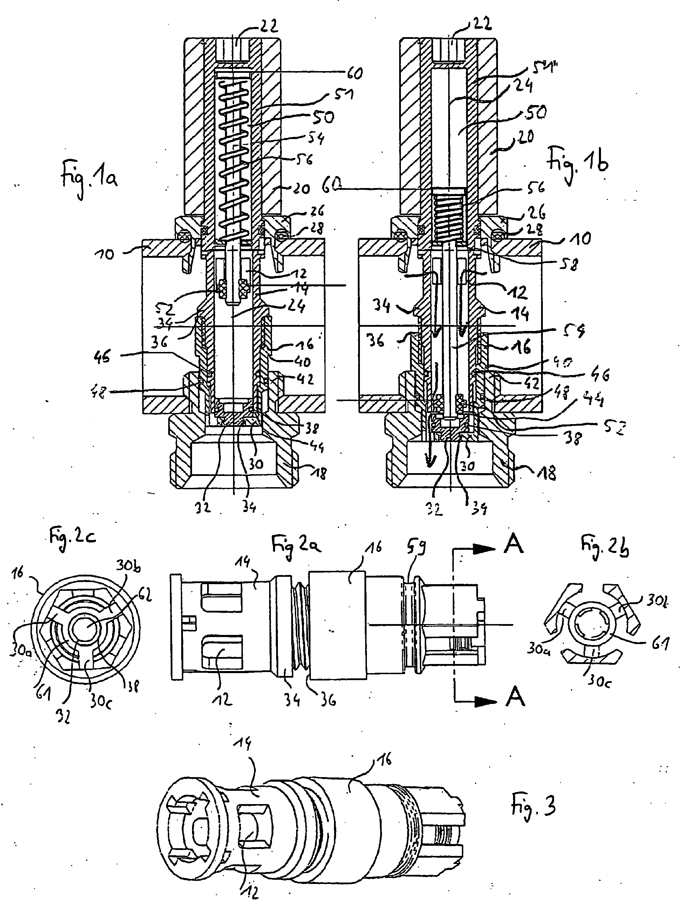

Bevorzugt weist die zweite Buchse mindestens einen Steg auf, an dem der Einsatz angeordnet ist. Alternativ kann vorgesehen sein, dass der Einsatz integral mit der zweiten Buchse ausgebildet ist. Die Verwendung mindestens eines Stegs bietet jedoch den Vorteil, dass der Einsatz und die zweite Buchse aus Kunststoff herstellbar sind. Bei einstückiger Ausführung des Einsatzes mit der zweiten Buchse ist eine Herstellung aus Kunststoff, beispielsweise durch Spritzguß, infolge der Hinterschneidung für den Dichtring des Einsatzes (siehe Dichtring 38 in Fig. 1b) nicht möglich. In Betracht kommt dann eine Herstellung aus einem Metall, bevorzugt Messing.

Für eine besonders homogene Durchflussströmung ist der Einsatz bevorzugt konzentrisch zur zweiten Buchse angeordnet.

In bevorzugten Ausführungsformen weisen die erste und die zweite Buchse jeweils einen "geschlossen"-Anschlagbereich auf, um eine "geschlossen"-Stellung des Drosselventils zu definieren, in der das Drosselventil vollständig abgeschlossen ist.

Bevorzugt weist die zweite Buchse einen "offen"-Anschlagbereich auf, um eine "maximal-offen"-Stellung des Drosselventils zu definieren.

Eine bevorzugte Gruppe von Weiterbildungen des erfindungsgemäßen Drosselventils weist weiterhin eine Durchflussmesseinheit zur Messung des Durchflusses auf. Bei den aus dem Stand der Technik bekannten Drosselventilen mit Durchflussmesseinrichtungen, die eine Ventilstange mit einer Anströmscheibe verwenden, besteht das Problem, der Abdichtung der Ventilstange gegenüber dem "Einsatz", da diese durch den "Einsatz" hindurchgeht. Die erfindungsgemäße Konstruktion eines Drosselventils erlaubt die Erweiterung um eine Durchflußmesseinrichtung ohne dass das bekannte Problem auftritt, und vermeidet daher aufwändige Abdichtvorrichtungen.

Bevorzugt weist die Durchflussmesseinheit einen Anzeigekörper auf, der in der Drehvorrichtung beweglich angeordnet ist. Bevorzugt kann vorgesehen sein, dass ein Teil der Durchflussmesseinheit als die bereits erwähnte Drehvorrichtung zur Drehung der ersten Buchse verwendet werden kann.

Bevorzugt ist der Anzeigekörper mit einem Federelement verbunden, das eine Federkraft entgegen einer Strömungsrichtung der Flüssigkeit innerhalb der ersten Buchse ausübt. Weiterhin ist der Anzeigekörper bevorzugt über eine Stange mit dem Federelement verbunden.

Schließlich kann vorgesehen werden, dass der Anzeigekörper, das Federelement oder die Stange mit einem Zeiger einer Anzeigeeinheit zur Anzeige der Durchflussmenge verbunden ist oder die Durchflussmenge selbst anzeigt.

Weitere vorteilhafte Ausführungsformen ergeben sich aus den Unteransprüchen.

Im Nachfolgenden wird nunmehr ein Ausführungsbeispiel der Erfindung unter Bezugnahme auf die beigefügten Zeichnungen näher beschrieben. Es zeigen:
- Figur 1a: einen Längsschnitt durch ein erfindungsgemäßes Drosselventil, wobei sich das Drosselventil in der "geschlossen"-Stellung befindet;
- Figur 1b: das Drosselventil von Figur 1a, wobei sich das Drosselventil in der "maximal- offen"-Stellung befindet;
- Figur 2: in Figur 2a eine Seitenansicht auf die Kombination der ersten Buchse, der zweiten Buchse und des Einsatzes, in Figur 2b eine Ansicht in Richtung des Schnitts A-A von Figur 2a, und in Figur 2c eine Ansicht von links auf die Buchse 16 von. Figur 2a;
- Figur 3: eine perspektivische Ansicht auf die Kombination von Figur 2, wobei die ers- te Buchse zum Betrachter orientiert ist;
- Figur 4: eine perspektivische Ansicht der Kombination der Figuren 2 und 3, wobei die zweite Buchse zum Betrachter orientiert ist; und
- Figur 5: die Darstellung von Figur 4 mit längsgeschnittener zweiter Buchse.

Die Figuren 1a und 1b zeigen ein erfindungsgemäßes Drosselventil, die Figur 1a in geschlossener Stellung, die Figur 1b in geöffneter Stellung. In geöffneter Stellung fließt je nach eingestellter Durchflussmenge Flüssigkeit, die in dem Hauptrohr 10 geführt wird - wie durch den Pfeil gekennzeichnet -, durch Öffnungen 12 in einer ersten Buchse 14 in eine zweite Buchse 16 und von dort in eine Abzweigungsleitung, die am Anschlussstück 18 angeschlossen werden kann. Die erste Buchse 14 ist an eine Drehvorrichtung 51 gekoppelt, die über einen Innensechskant 22 gedreht werden kann. Auf der Drehvorrichtung 51 ist ein Skalenmantel 20 drehbar angeordnet.

Durch die Drehung der Drehvorrichtung 51 kann die zweite Buchse 16 entlang der Längsachse 24 gegenüber der ersten Buchse 14 verstellt werden, wobei die zweite Buchse 16 gegen Verdrehen gesichert ist. Die Drehvorrichtung 51 ist über ein Anschlussstück 26 an dem Hauptrohr 10 befestigt, insbesondere in dieses eingeschraubt. Für eine dichte Verbindung sorgt ein Dichtring 28. Entsprechendes gilt für das Anschlussstück 18, wobei dort der Übersichtlichkeit halber der Dichtring nicht dargestellt ist. Während die Anschlussstücke 18, 26 bevorzugt aus Metall gefertigt sind, bestehen die beiden Buchsen 14, 16 bevorzugt aus Kunststoff. In der zweiten Buchse 16 ist über drei Stege, wobei in Figur 1 lediglich ein Steg 30 im Schnitt zu sehen ist, ein Einsatz 32 befestigt. In der "geschlossen"-Stellung, siehe Figur 1a, die durch das Aufeinandertreffen eines Anschlags 34 der ersten Buchse 14 und eines Anschlags 36 der zweiten Buchse 16 definiert ist, ist der Einsatz 32 in die erste Buchse 14 eingetaucht und schließt das Innere der ersten Buchse 14 mittels eines Dichtrings 38 dicht ab. In der "maximal-offen"-Stellung, welche durch das Auftreffen eines zweiten Anschlags 40 der zweiten Buchse 16 auf einem Anschlag 42 des Anschlussstücks 18 definiert ist, befindet sich der Einsatz 32 komplett außerhalb der ersten Buchse 14 und wird über einen Schnappmechanismus 34 an den Stegen 30 der zweiten Buchse gehalten. Dadurch ergibt sich ein Ringspalt 44, der definiert ist durch den Abstand des Einsatzes 32 von der Stirnfläche der ersten Buchse 14. Ringe 46, 48 dienen der Abdichtung der ersten Buchse 14 gegenüber der zweiten Buchse 16 einerseits sowie der zweiten Buchse 16 gegenüber dem Anschlussstück 18 andererseits. In der Drehvorrichtung 51, welche durchsichtig ausgebildet ist, ist eine Durchflussmessvorrichtung angeordnet, die einen Anzeigekörper 60 umfasst, der über eine Federvorrichtung 56, die sich gegen einen Anschlag 58 abstützt, an einer Stange 54, die an ihrem anderen Ende eine Strömungsscheibe 52 trägt, die von der die beiden - Buchsen 14, 16 durchströmenden Flüssigkeit beaufschlagt wird, geführt ist. Je größer die in den beiden Buchsen 14, 16 durchströmende Flüssigkeitsmenge ist, desto weiter wird die Strömungsscheibe 52 gegen die Kraft der Federvorrichtung 56 aus der Drehvorrichtung herausgezogen und umso weiter unten befindet sich der Anzeigekörper 60 innerhalb der Drehvorrichtung 51.

Aufgrund der durchsichtigen Ausbildung der Drehvorrichtung 51 kann der Anzeigekörper 60 die Durchflussmenge gegenüber dem auf der Drehvorrichtung 51 angeordneten Skalenmantel 20 anzeigen. Anstelle der direkten Anzeige mittels des Anzeigekörpers 60 kann selbstverständlich auch eine Übertragung der Bewegung der Stange 54 an eine Anzeigeeinheit mit einem Zeiger erfolgen. Der Skalenmantel 20 ist drehbar auf der Drehvorrichtung angeordnet und weist eine Durchbrechung 50 auf.

Figur 2a lässt die Schraubverbindung deutlicher erkennen, mit der die Buchse 14 und die Buchse 16 miteinander verbunden sind. Zu erkennen ist auch die Nut 59, die zum Einlegen des Dichtrings 48 dient. Figur 2b zeigt die Draufsicht auf den Schnitt A-A von Figur 2a und zeigt die drei Stege 30a, 30b, 30c, die in einen Ring 61 übergehen, der zum Halten des Einsatzes 32 dient. Figur 2c zeigt eine Ansicht der Buchse 16 gemäß Figur 2a von links mit eingesetztem Einsatz 32. Der Einsatz 32 weist in seiner Mitte eine Vertiefung 62 auf, um ein Eintauchen des vorderen Endes der Stange 54, die die Strömungsscheibe 52 trägt, zu ermöglichen.

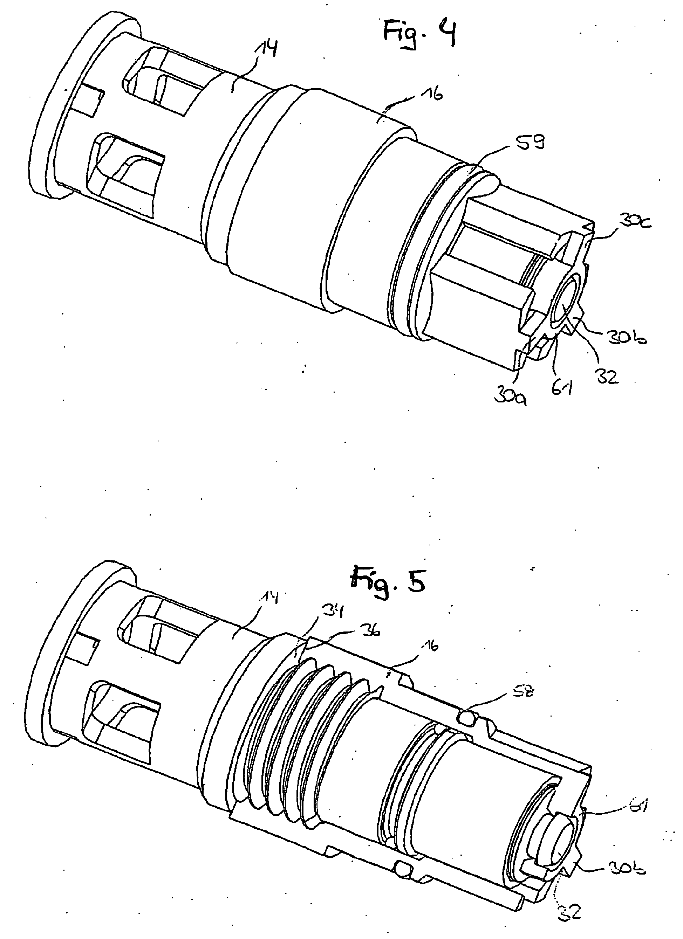

Figur 3 zeigt eine perspektivische Ansicht der Kombination der beiden Buchsen 14, 16 von Figur 2a, wobei die Buchse 14 zum Betrachter gewandt ist, während Figur 4 die entsprechend perspektivische Ansicht zeigt, wobei die Buchse 16 zum Betrachter gewandt ist.

Figur 5 schließlich zeigt die Darstellung von Figur 4 mit aufgeschnittener Buchse 16.

## Patentansprüche

1. Drosselventil, insbesondere zur Steuerung eines Flüssigkeitsstroms in einem Zentralheizungs- oder Klimaanlagensystem,
mit einer Durchflussregelungseinheit mit einem ersten (14) und einem zweiten Element (16), die zur Einstellung eines gewünschten Durchflusses relativ zueinander bewegbar angeordnet sind,
wobei das erste Element eine erste Buchse (14) und das zweite Element eine zweite Buchse (16) mit einem darin angeordneten Einsatz (32) umfasst, wobei beide Buchsen dieselbe Längsachse (24) aufweisen, und wobei die beiden Buchsen (14, 16) durch Drehung einer Buchse (14; 16) relativ zur zweiten (16; 14) entlang dieser Längsachse (24) relativ zueinander bewegbar sind,
**dadurch gekennzeichnet,**
**dass** die erste Buchse (14) ein Außengewinde und die zweite Buchse (16) ein damit korrespondierendes Innengewinde aufweist, wobei durch Drehung der ersten Buchse (14) die zweite Buchse (16), die gegen Verdrehen gesichert ist, entlang der Längsachse (24) relativ zur ersten Buchse (14) bewegbar ist, so dass die Querschnittsöffnung eines vom Einsatz (32) und der ersten Buchse (14) gebildeten Ringspalts (44) variierbar ist.

2. Drosselventil nach Anspruch 1,
**dadurch gekennzeichnet,**
**dass** die Durchflussregelungseinheit eine Drehvorrichtung (20) umfasst, die derart mit der ersten Buchse (14) verbunden ist, dass die erste Buchse (14) durch Drehung der Drehvorrichtung (20) relativ zur zweiten Buchse (16) drehbar ist.

3. Drosselventil nach Anspruch 1 oder 2,
**dadurch gekennzeichnet,**
**dass** die erste Buchse (14) eine erste (12) und eine zweite Öffnung aufweist, die ausgelegt sind, dass entweder die Flüssigkeit durch die erste Öffnung (12) in die erste Buchse (14) einströmen und durch die zweite Öffnung in die zweite Buchse (16) ausströmen kann oder die Flüssigkeit von der zweiten Buchse (16) kommend durch die zweite Öffnung in die erste Buchse (14) hineinströmen und über die erste Öffnung (12) aus der ersten Buchse (14) herausströmen kann.

4. Drosselventil nach einem der vorhergehenden Ansprüche,
**dadurch gekennzeichnet,**
**dass** der Durchmesser der Buchsen (14, 16) derart aufeinander abgestimmt ist, dass eine Buchse (14) zumindest teilweise entlang ihrer Längserstreckung in der anderen Buchse (16) angeordnet ist.

5. Drosselventil nach einem der vorhergehenden Ansprüche,
**dadurch gekennzeichnet,**
**dass** die zweite Buchse (16) mindestens einen Steg (30) aufweist, an dem der Einsatz (32) angeordnet ist.

6. Drosselventil nach einem der vorhergehenden Ansprüche,
**dadurch gekennzeichnet,**
**dass** der Einsatz (32) konzentrisch zur zweiten Buchse (16) angeordnet ist.

7. Drosselventil nach einem der vorhergehenden Ansprüche,
**dadurch gekennzeichnet,**
**dass** die erste und die zweite Buchse (14, 16) jeweils einen geschlossen-Anschlagbereich (34, 36) aufweisen, um eine "geschlossen"-Stellung des Drosselventils zu definieren, in der das Drosselventil vollständig geschlossen ist.

8. Drosselventil nach einem der vorhergehenden Ansprüche,
**dadurch gekennzeichnet,**
**dass** die zweite Buchse (16) einen offen-Anschlagbereich (40) aufweist, um eine "maximal-offen"-Stellung des Drosselventils zu definieren.

9. Drosselventil nach einem der vorhergehenden Ansprüche,
**dadurch gekennzeichnet,**
**dass** es weiterhin eine Durchflussmesseinheit zur Messung des Durchflusses umfasst, wobei die Durchflussmesseinheit einen Anzeigekörper (60) aufweist, der in der Drehvorrichtung (20) beweglich angeordnet ist.

10. Drosselventil nach Anspruch 9,
**dadurch gekennzeichnet,**
**dass** der Anzeigekörper (60) mit einem Federelement (56) verbunden ist, das eine Federkraft entgegen einer Strömungsrichtung der Flüssigkeit innerhalb der ersten Buchse (14) ausübt.

11. Drosselventil nach Anspruch 10,
**dadurch gekennzeichnet,**
**dass** der Anzeigekörper (60) über eine Stange (54) mit dem Federelement (56) verbunden ist.

12. Drosselventil nach einem der vorhergehenden Ansprüche,
**dadurch gekennzeichnet,**
**dass** der Anzeigekörper (60), das Federelement (56) oder die Stange (54) mit einem Zeiger einer Anzeigeeinheit zur Anzeige der Durchflussmenge verbunden ist oder die Durchflussmenge selbst anzeigt.

## Claims

1. A throttle valve, in particular for controlling a liquid flow in a central heating or an air conditioning system,
said valve comprising a flow control unit having a first (14) and a second element (16) which are movably arranged relative to each other for setting the desired flow, wherein said first element comprises a first bushing (14) and said second element comprises a second bushing (16) with an insert (32) arranged therein, wherein both bushings have the same longitudinal axis (24), and wherein both said bushings (14, 16) by way of rotation of one bushing (14; 16) relative to the second one (16; 14) along this longitudinal axis (24) are movable relative to each other,
**characterized in that**
said first bushing (14) has an external thread and said second bushing (16) has an internal thread corresponding with it, wherein by way of rotating said first bushing (14) said second bushing (16), which is secured against distortion, is movable along said longitudinal axis (24) relative to said first bushing (14), so that the cross-sectional aperture of an annular gap (44) formed by said insert (32) and said first bushing (14) is variable.

2. A throttle valve according to claim 1,
**characterised in that**
said flow control unit comprises a rotator (20), which is connected to said first bushing (14) in such a way that said first bushing (14) is rotatable by way of rotation of the rotator (20) relative to said second bushing (16).

3. A throttle valve according to claims 1 or 2,
**characterised in that**
said first bushing (14) has a first (12) and a second aperture which are designed in such a way that the liquid can either flow through said first aperture (12) into said first bushing (14) and flow out through said second aperture into said second bushing (16), or the liquid coming from said second bushing (16) can flow through said second aperture into said first bushing (14) and via said first aperture (12) can flow out from said first bushing (14).

4. A throttle valve according to one of the preceding claims,
**characterised in that**
the diameter of said bushings (14, 16) is adapted to each other in such a way that one bushing (14) is arranged at least partially along its longitudinal extension within the other bushing (16).

5. A throttle valve according to one of the preceding claims,
**characterised in that**
said second bushing (16) has at least one bar (30) at which said insert (32) is arranged.

6. A throttle valve according to one of the preceding claims,
**characterised in that**
said insert (32) is arranged concentrically to said second bushing (16).

7. A throttle valve according to one of the preceding claims,
**characterised in that**
said first and said second bushing (14, 16) each have a closed-stop region (34, 36), in order to define a "closed" position of said throttle valve, in which said throttle valve is completely closed.

8. A throttle valve according to one of the preceding claims,
**characterised in that**
said second bushing (16) has an open-stop region (40), in order to define a "maximally open" position of the throttle valve.

9. A throttle valve according to one of the preceding claims,
**characterised in that**
it further comprises a flow measurement unit for measuring the flow rate, wherein the flow measurement unit has an indicator body (60), which is movably arranged within said rotator (20).

10. A throttle valve according to claim 9,
**characterised in that**
said indicator body (60) is connected to a spring element (56) which exerts a spring force against the direction of flow of the liquid within said first bushing (14).

11. A throttle valve according to claim 10,
**characterised in that**
said indicator body (60) is connected via a rod (54) to said spring element (56).

12. A throttle valve according to one of the preceding claims,
**characterised in that**
the indicator body (60), the spring element (56), or the rod (54) is connected to an indicator of an indicator unit for indicating the flow rate or indicating the flow rate itself.

## Revendications

1. Soupape d'étranglement, destinée en particulier à commander un flux de liquide dans un système de chauffage central ou de climatisation, avec une unité de régulation d'écoulement avec un premier (14) et un deuxième élément (16), qui sont disposés de manière mobile l'un par rapport à l'autre en vue du réglage d'un écoulement désiré,
moyennant quoi le premier élément comprend une première douille (14) et le deuxième élément une deuxième douille (16) avec un insert (32) qui y est disposé, moyennant quoi les deux douilles présentent le même axe longitudinal (24) et moyennant quoi les deux douilles (14, 16) sont mobiles l'une par rapport à l'autre par rotation d'une douille (14 ; 16) par rapport à la deuxième (16 ; 14), le long de cet axe longitudinal (24),
**caractérisée en ce**
**que** la première douille (14) présente un filetage mâle et la deuxième douille (16) un filetage femelle qui y correspond, moyennant quoi la deuxième douille (16), qui est bloquée en rotation, est mobile, le long de l'axe longitudinal (24), par rapport à la première douille (14), par le biais de la rotation de la première douille (14), de sorte que l'ouverture transversale peut varier d'un espace annulaire (44), formé par l'insert (32) et la première douille (14).

2. Soupape d'étranglement suivant la revendication 1,
**caractérisée en ce**
**que** l'unité de régulation d'écoulement comprend un dispositif de rotation (20), qui est relié à la première douille (14), de telle sorte que la première douille (14) peut pivoter par rapport à la deuxième douille (16) par le biais de la rotation du dispositif de rotation (20).

3. Soupape d'étranglement suivant la revendication 1 ou 2,
**caractérisée en ce**
**que** la première douille (14) présente une première (12) et une deuxième ouverture, qui sont conçues de sorte que soit le liquide peut pénétrer par la première ouverture (12) dans la première douille (14) et s'écouler par la deuxième ouverture dans la deuxième douille (16), soit le liquide peut pénétrer, en venant de la deuxième douille (16), par la deuxième ouverture, dans la première douille (14) et s'écouler, par l'intermédiaire de la première ouverture (12), en provenant de la première douille (14).

4. Soupape d'étranglement suivant l'une des revendications précédentes,
**caractérisée en ce**
**que** le diamètre des douilles (14, 16) est adapté l'un à l'autre, de telle sorte qu'une douille (14) est agencée, au moins partiellement le long de son parcours longitudinal, dans l'autre douille (16).

5. Soupape d'étranglement suivant l'une des revendications précédentes,
**caractérisée en ce**
**que** la deuxième douille (16) présente au moins une barrette (30), sur laquelle est disposé l'insert (32).

6. Soupape d'étranglement suivant l'une des revendications précédentes,
**caractérisée en ce**
**que** l'insert (32) est disposé de manière concentrique par rapport à la deuxième douille (16).

7. Soupape d'étranglement suivant l'une des revendications précédentes,
**caractérisée en ce**
**que** la première et la deuxième douille (14, 16) présentent respectivement une zone de butée fermée (34, 36), pour définir une position "fermée" de la soupape d'étranglement, dans laquelle la soupape d'étranglement est entièrement fermée.

8. Soupape d'étranglement suivant l'une des revendications précédentes,
**caractérisée en ce**
**que** la deuxième douille (16) présente une zone de butée ouverte (40), pour définir une position "ouverte maximale" de la soupape d'étranglement.

9. Soupape d'étranglement suivant l'une des revendications précédentes,
**caractérisée en ce**
**qu'**elle comprend en outre une unité de mesure d'écoulement, destinée à mesurer l'écoulement, moyennant quoi l'unité de mesure d'écoulement présente un corps d'indicateur (60), qui est disposé de manière mobile dans le dispositif de rotation (20).

10. Soupape d'étranglement suivant la revendication 9,
**caractérisée en ce**
**que** le corps d'indicateur (60) est relié à un élément formant ressort (56), qui exerce une tension de ressort opposée à un sens d'écoulement du liquide dans la première douille (14).

11. Soupape d'étranglement suivant la revendication 10,
**caractérisée en ce**
**que** le corps d'indicateur (60) est relié par l'intermédiaire d'une tige (54) à l'élément formant ressort (56).

12. Soupape d'étranglement suivant l'une des revendications précédentes,
**caractérisée en ce**
**que** le corps d'indicateur (60), l'élément formant ressort (56) ou la tige (54) est relié à l'aiguille d'une unité d'affichage, destinée à afficher la quantité débitée ou affiche lui-même la quantité débitée.
